(19) Europäisches Patentamt

European Patent Office

Office européen des brevets

(11) Veröffentlichungsnummer: **0 470 621 A2**

(12) **EUROPÄISCHE PATENTANMELDUNG**

(21) Anmeldenummer: **91113343.7**

(22) Anmeldetag: **08.08.91**

(51) Int. Cl.5: **C04B 35/56**

(30) Priorität: **09.08.90 DE 4025239**

(43) Veröffentlichungstag der Anmeldung:
**12.02.92 Patentblatt 92/07**

(84) Benannte Vertragsstaaten:
**AT BE CH DE DK ES FR GB IT LI LU NL SE**

(71) Anmelder: **Hoechst CeramTec
Aktiengesellschaft
Wilhelmstrasse 14
W-8672 Selb(DE)**

(72) Erfinder: **Benker, Werner
Ahornweg 28
W-8672 Selb(DE)**
Erfinder: **Schmidt, Jürgen
Oberdorfstrasse 30
W-8590 Marktredwitz(DE)**

(74) Vertreter: **Spiess, Bernhard et al
Hoechst AG Zentrale Patentabteilung
Postfach 80 03 20
W-6230 Frankturt am Main 80(DE)**

(54) **Verfahren zur Herstellung von Formkörpern aus siliciuminfiltriertem Siliciumcarbid.**

(57) Zum Silizieren von porösen Formkörpern aus Siliziumcarbid oder Siliciumcarbid/Kohlenstoff, die mindestens eine ebene Außenfläche besitzen, wird ein Gemisch aus Siliziumcarbid-Pulver, organischem Bindemittel und gegebenenfalls Kohlenstoff zu einem Grünkörper verformt, das Bindemittel des Grünkörpers in einer nicht oxidierenden Atmosphäre durch Verkokung bei ca. 1000 °C entfernt und der erhaltene Rohling durch Einwirken von flüssigem Silizium bei Temperaturen von mindestens 1400 °C siliziert. Dabei liegt der erhaltene Rohling mit einer ebenen Außenfläche auf einem porösen SiSiC-Träger auf, der mit seinem unteren Teil mit dem flüssigen Silizium in Kontakt steht. Die Auflagefläche des Trägers ist eben und besitzt mehrere Ausnehmungen.

EP 0 470 621 A2

Die Erfindung betrifft ein verfahren zum Silizieren von porösen Formkörpern aus Siliziumcarbid/Kohlenstoff mit einer ebenen Außenfläche unter Verwendung eines porösen, ebenen Trägers aus siliziuminfiltriertem Siliziumcarbid, der Ausnehmungen aufweist.

Bei der Infiltration von Siliziumcarbid-Formkörpern mit Silizium bilden sich oftmals Zonen mit besonders hohem Siliziumgehalt, sogenannte silizierte Bahnen, und daneben untersilizierte Bauteile. Beides führt zu Ausschuß.

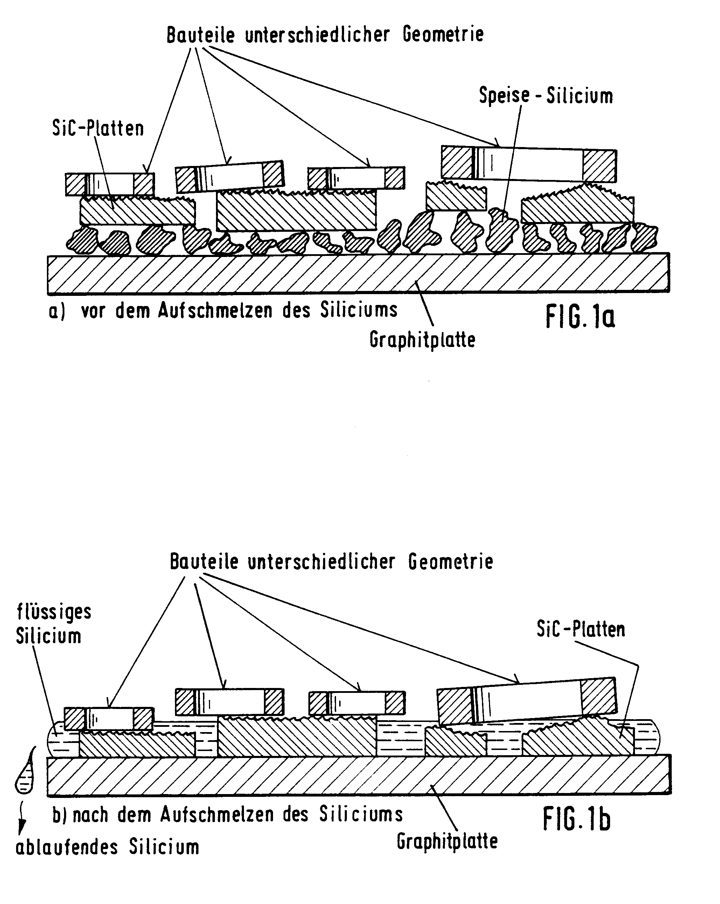

Nach dem Verfahren der EP 0 134 254 erfolgt die Infiltration des Siliziumcarbid/Kohlenstoff-Formkörpers über eine poröse Siliziumcarbidplatte, die mit einer Beschichtung aus Bornitrid, Siliziumcarbid und Kohlenstoff versehen ist. Unterhalb der Siliziumcarbidplatte und gegebenenfalls seitlich von ihr befindet sich (vor dem Aufheizen des Ofens) stückiges elementares Silizium. Es hat sich jedoch gezeigt, daß die Verwendung von plattenförmigen SiSiC-Infiltrationshilfsmitteln Nachteile aufweist. Wenn das Silizium, das sich zwischen den Brennplatten und den als Infiltrationshilfsmittel benutzten Siliziumcarbid-Platten befindet, aufgeschmolzen ist, so sinken die Platten aufgrund der Schwerkraft durch das (spezifisch leichtere)Silizium und verdrängen dieses. Aufgrund der Oberflächenspannung können sich auf der Brennplatte Siliziumspiegel von bis zu 5 mm Höhe ausbilden. Wenn sich nach dem Durchsinken der als Infiltrationshilfsmittel benutzten Siliziumcarbidplatten ein höherer Spiegel ausbilden würde, so würde dies zum Ablauf des Siliziums von der Platte führen (Figur 1a und b). Da die Menge des Siliziums auf der Brennplatte so bemessen wird, daß sie gerade ausreicht, um die darauf befindlichen Bauteile vollständig zu infiltrieren und auch die Verdampfungsverluste auszugleichen, führt das Ablaufen von Silizium zu einer unvollständigen Infiltration von mindestens einigen Bauteilen. Ein vorsorgliches Überangebot an Silizium auf der Brennplatte verbietet sich, da sonst die Bauteile nach dem Abkühlen so fest mit dem Infiltrationshilfsmittel verbunden sind, daß ein Ablösen ohne Beschädigung nicht möglich ist. Wenn das Silizium von einer Brennplatte auf eine darunter liegende läuft, so tritt der Effekt des Verklebens dort auf.

Wie oben erwähnt, steigt durch das Einsinken der SiSiC-Platten in das schmelzflüssige Silizium der Siliziumpegel. Dies kann dazu führen, daß bei Verwendung zu niedriger Platten die Bauteile in direktem Kontakt mit dem geschmolzenen Silizium gelangen. Dies führt zu einer ungleichmäßigen Infiltration und dem Auftreten von Spannungen im Bauteil, was sich häufig durch Rißbildung äußert. Die entstandenen Risse füllen sich mit Silizium und sind im Bauteil als silizierte Bahnen sichtbar. Verhindert werden könnte dieser Effekt einerseits durch eine Reduzierung der Siliziummenge je Brennplatte oder durch eine Erhöhung der Dicke der Siliziumcarbid-Platten. Beide Möglichkeiten verringern jedoch die Wirtschaftlichkeit des Verfahrens. Das beschriebene Verfahren unter Verwendung von SiSiC-Platten wird auch verwendet, um Rohlinge zu silizieren, die mindestens eine ebene Auflagefläche besitzen.

Bei geringer Dicke der verwendeten porösen Trägerplatte, d.h. bei geringerem Abstand zum flüssigen Silizium ist es jedoch schwierig, eine gleichmäßige Silizierung zu erreichen.

Mit dem in der DE-OS 37 19 606 angegebenen Verfahren, die poröse SiC-Platte auf einem Behälter für flüssiges Silizium anzuordnen, lassen sich einige der beschriebenen Nachteile beheben. Es verbleibt jedoch der Nachteil, daß Rohlinge mit ebenen Auflageflächen nach beendeter Silizierung von der ebenen porösen SiC-Platte in vielen Fällen nur schwer zu entfernen sind.

Es bestand daher die Aufgabe ein Verfahren anzugeben, mit dem Formkörper siliziert werden können, die mindestens eine ebene Außenfläche besitzen und bei dem die silizierten Körper leicht von der Unterlage ohne Beschädigung entfernt werden können.

Es wurde nun ein Verfahren zum Silizieren von porösen Formkörpern aus Siliziumcarbid/Kohlenstoff, die mindestens eine ebene Außenfläche besitzen, gefunden, bei dem man ein Gemisch aus Siliziumcarbid-Pulver, organischem Bindemittel und gegebenenfalls Kohlenstoff zu einem Grünkörper verformt, man das Bindemittel des Grünkörpers in einer nicht oxidierenden Atmosphäre durch Verkokung bei ca. 1000$^\circ$C entfernt und man den erhaltenen Rohling durch Einwirken von flüssigem Silizium bei Temperaturen von mindestens 1400$^\circ$C siliziert, wobei der erhaltene Rohling mit einer ebenen Außenfläche auf einem porösen SiSiC-Träger aufliegt, der mit seinem unteren Teil mit flüssigem Silizium in Kontakt steht, und die Anordnung aus SiSiC-Träger und erhaltenem Formkörper nach beendeter Silizierung abgekühlt wird, dadurch gekennzeichnet, daß die Auflagefläche des Trägers eben ist und mehrere Ausnehmungen besitzt.

Nach einer Ausführungsform des erfindungsgemäßen Verfahrens weist der poröse SiSiC-Träger die Form eines Rostes auf, der neben Außenwänden noch mindestens eine Innenwand enthält, wobei Außenwände und Innenwände oben in gleicher Höhe enden (d.h. zur Ablage eines Körpers mit einer ebenen Außenfläche geeignet sind) und zumindest die Außenwände in Kontakt stehen mit dem flüssigen Silizium.

Der Träger kann auch die Form eines Behälters annehmen, d.h. unten zur Aufnahme von flüssigem Silizium geeignet sein. Es ist aber auch möglich, den Rost auf einer an sich bekannten Platte abzustellen, auf der auch stückiges Silizium später aufgeschmolzen wird. Zur Erhöhung des Siliziumflusses können auch die Innenwände soweit nach unten gezogen werden, daß sie (wie die Außenwände) in Kontakt stehen mit dem flüssigen Silizium.

Der die Ablagefläche bildende Rost weist vorzugsweise mehrere paralle Innenwände auf. Es ist auch möglich, daß zwei Systeme von parallelen Innenwänden vorhanden sind, die sich schneiden und insbesondere senkrecht zueinander angeordnet sind.

Falls die Außenfläche des zu silizierenden Rohlings völlig eben ist, d.h. weder Rippen noch Ausnehmungen aufweist, so kann die gemeinsame Kontaktfläche dadurch verringert werden, daß die Innenwände des rostförmigen Trägers an der Oberkante Ausnehmungen aufweisen. Vorzugsweise sind die Ausnehmungen an der Oberkante rechteckig, so daß die Oberseite der Innenwände die Form einer Zinnenwand erhält. Es ist auch möglich, gleichzeitig die Außenwände entsprechend zu gestalten.

Die gemeinsame Kontaktfläche zwischen Träger und aufgelegtem siliziertem Rohling (und damit die Schwierigkeiten beim Entfernen des Rohlings nach dem Silizieren) können auch dadurch verringert werden, daß die Wandenden des Rostes oben abgerundet sind.

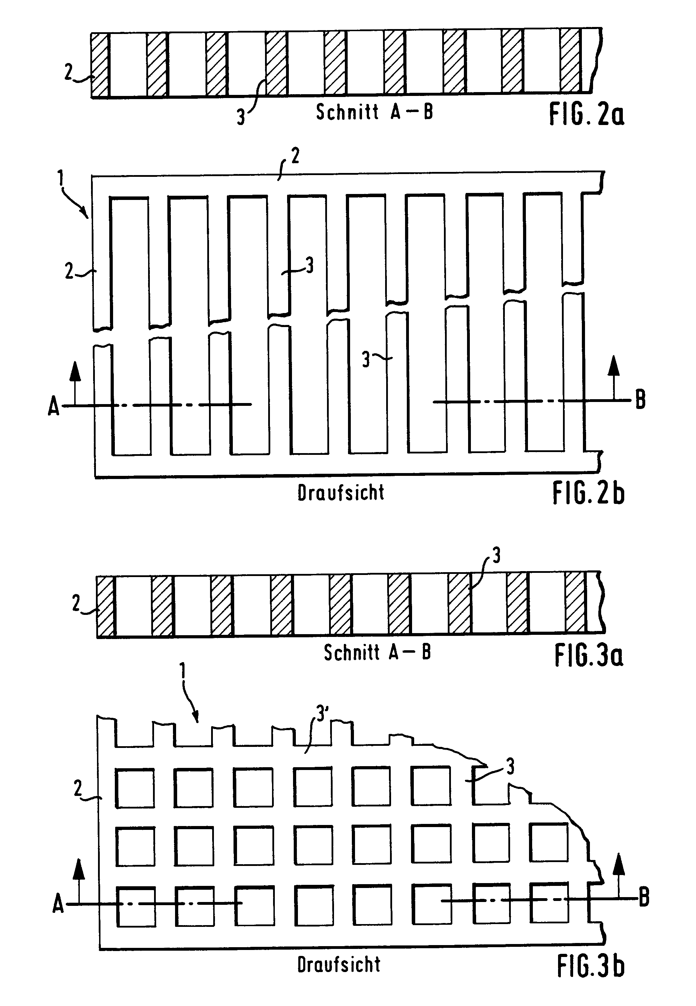

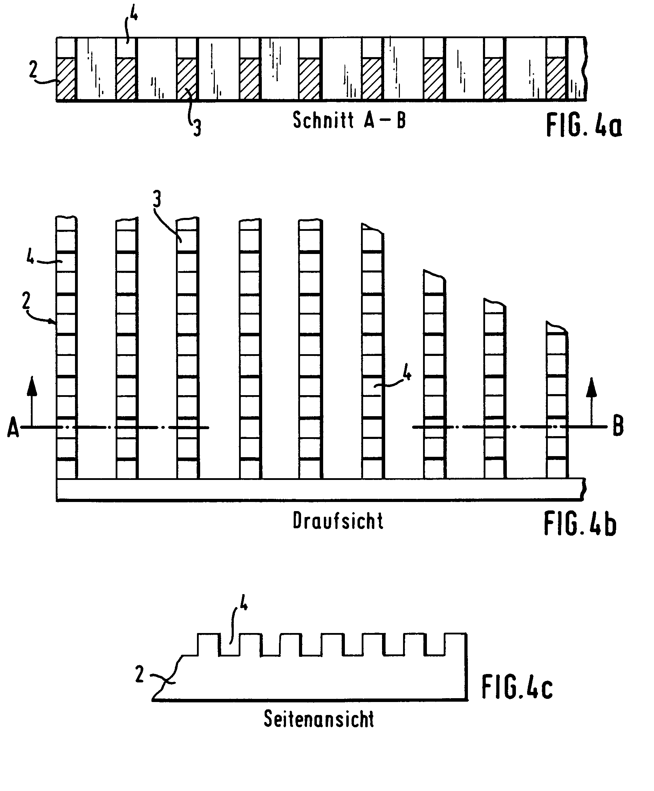

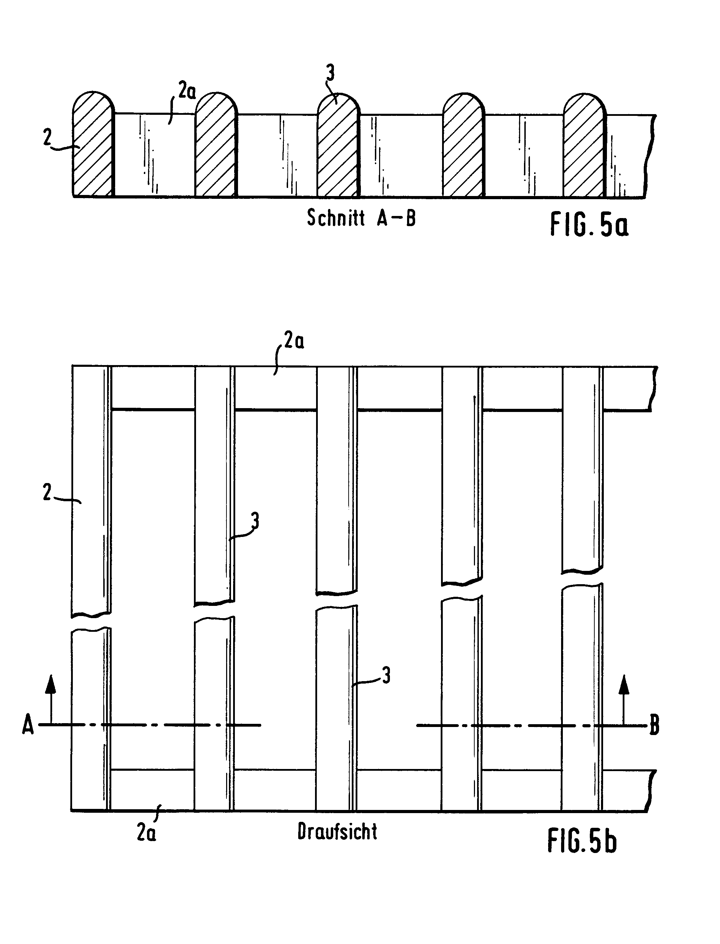

Figuren 2 bis 5 zeigen SiSiC-Träger 11 in der Form eines Rostes (1), der neben Außenwänden 2 noch mindestens eine Innenwand 3 enthält. Die Innenwände der Figuren 2 bis 4 zeigen mehrere parallelen Innenwände. Die Innenwände der Figur 3 zeigen zwei Systeme von parallelen Innenwänden (3 und 3') die senkrecht zueinander angeordnet sind. In Figur 4a weisen die Innenwände und teilweise die Außenwände an der Oberkante rechteckige Ausnehmungen (4) auf.

Nach einer anderen Ausgestaltung des erfindungsgemäßen Verfahrens besitzt der poröse SiSiC-Träger die Form einer Dose, die auf ihren Seitenwänden steht, wobei die Seitenwände unten in Kontakt stehen mit dem flüssigen Silizium, der Außenboden der Dose nach oben weist und mit nach oben ragenden Rippen versehen ist.

Vorzugsweise ist die Dose kreisförmig und die Rippen konzentrisch angeordnet. Jedoch kann auch der Boden ringförmig sein, d.h. eine konzentrisch angeordnete Ausnehmung aufweisen. Auch hier sollen die Rippen konzentrisch angeordnet sein. Mit einem solchen SiSiC-Träger lassen sich vorzugsweise Rohlinge silizieren, die einen T-förmigen Querschnitt aufweisen. Dabei wird der Mittelteil des Rohlings von der zentrischen Durchbrechung des Trägers aufgenommen und der Rohling ruht auf seinen "Balken" mit dem T-förmigen Querschnitt.

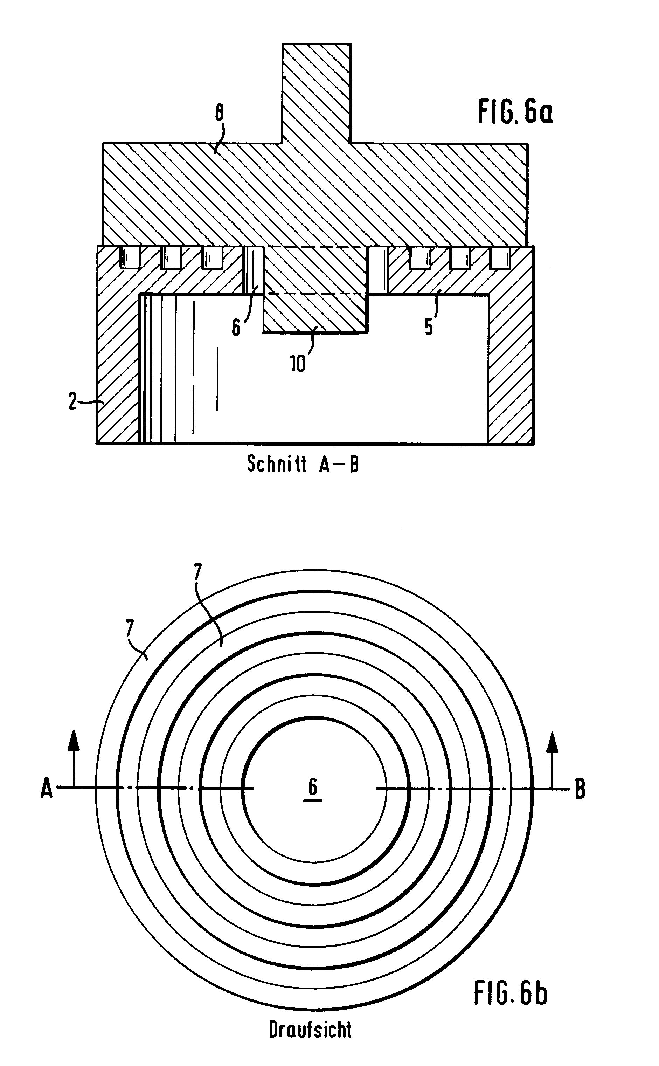

Die Geschwindigkeit mit der das Silizium das Infiltrationshilfsmittel durchwandert, läßt sich steuern, durch die Menge und Größe des Porendurchmessers im Hilfsmittel. Dieser Effekt wird (für die Silizierung des Grünkörpers) bereits beschrieben in Special Ceramics 5, 1970 im Zusammenhang mit Figur 6.

Eine Verkleinerung des Porendurchmessers bremst den Siliziumfluß, eine Vergrößerung beschleunigt ihn. Die Größe der Porenradien hängt von den bei der Herstellung der Brennhilfsmittel eingesetzten Siliziumcarbid-Körnungen ab. Grobe Körnungen (z.B. F 230) ergeben große Poren, feine Körnungen (z.B. F 1200) ergeben kleine Poren. Durch eine geeignete Auswahl der Siliziumcarbid-körnungen kann somit erforderlichenfalls ein großer Bereich von Porenradienverteilungen eingestellt werden.

In Figur 6 wird ein SiSiC-Träger 12 dargestellt, der die Form einer kreisförmigen Dose besitzt, die auf ihrer kreisförmigen Seitenwand 2 steht, wobei der Boden der Dose (5) ringförmig ist und eine konzentrisch angeordnete Ausnehmung 6 aufweist. Ferner besitzt die Dose an dem nach oben weisenden Außenboden mehrere Rippen 7, die ebenfalls konzentrisch angeordnet sind. Die Seitenwand der Dose steht (nicht gezeichnet) unten in Kontakt mit dem flüssigen Silizium. In der Figur ist auf dem Träger ein Rohling 8 abgelegt, der einen etwa T-förmigen Querschnitt aufweist. Der Mittelteil (10) des Rohlings wird von der zentrischen Ausnehmung 6 des Trägers aufgenommen. Die "Balken" des Rohlings (8) mit dem T-förmigen Querschnitt werden auf den Rippen 9 abgestützt.

**Patentansprüche**

1. Verfahren zum Silizieren von porösen Formkörpern aus Siliziumcarbid oder Siliziumcarbid/Kohlenstoff, die mindestens eine ebene Außenfläche besitzen, bei dem man ein Gemisch aus Siliziumcarbid-Pulver, organischem Bindemittel und gegebenenfalls Kohlenstoff zu einem Grünkörper verformt, man das Bindemittel des Grünkörpers in einer nicht oxidierenden Atmosphäre durch Verkokung bei ca. 1000 ° C entfernt und man den erhaltenen Rohling durch Einwirken von flüssigem Silizium bei Temperaturen von mindestens 1400 ° C siliziert, wobei der erhaltene Rohling mit einer ebenen Außenfläche auf einem porösen SiSiC-Träger aufliegt, der mit seinem unteren Teil mit dem flüssigen Silizium in Kontakt steht, dadurch gekennzeichnet, daß die Auflagefläche des Trägers eben ist und mehrere Ausnehmungen besitzt.

2. Verfahren gemäß Anspruch 1, dadurch gekennzeichnet, daß die Trägerfläche die Form eines Rostes aufweist, der neben Außenwänden noch mindestens eine Innenwand enthält, Außenwände und Innenwände oben in gleicher Höhe enden und zumindest die Außenwände in Kontakt stehen mit dem flüssigen Silizium.

3. Verfahren nach Anspruch 2, dadurch gekennzeichnet, daß der Rost mehrere parallele Innenwände aufweist.

4. Verfahren nach Anspruch 3, dadurch gekennzeichnet, daß zwei Systeme von parallelen Innenwänden vorhanden sind, die senkrecht zueinander angeordnet sind.

5. Verfahren nach Anspruch 2, dadurch gekennzeichnet, daß die Innenwände an der Oberkante Ausnehmungen aufweisen.

6. Verfahren nach Anspruch 5, dadurch gekennzeichnet, daß die Ausnehmungen an der Oberkante rechteckig sind, so daß die Oberseite der Innenwände die Form einer Zinnenwand erhält.

7. Verfahren nach Anspruch 1, dadurch gekennzeichnet, daß die Wandenden oben abgerundet sind.

8. Verfahren nach Anspruch 1, dadurch gekennzeichnet, daß der SiSiC-Träger die Form einer Dose besitzt, die auf ihren Seitenwänden steht, die Seitenwände unten in Kontakt stehen mit dem flüssigen Silizium, der Außenboden der Dose nach oben weist und mit Rippen versehen ist.

9. Verfahren nach Anspruch 8, dadurch gekennzeichnet, daß die Dose kreisförmig ist und die Rippen konzentrisch angeordnet sind.

10. Verfahren nach Anspruch 8, dadurch gekennzeichnet, daß der Boden der Dose ringförmig ist und eine konzentrisch angeordnete Durchbrechung aufweist und die Rippen konzentrisch angeordnet sind.

11. Verfahren nach Anspruch 10, dadurch gekennzeichnet, daß ein Rohling siliziert wird, der einen T-förmigen Querschnitt aufweist, dessen Mittelteil in der zentrischen Durchbrechung des Trägers angeordnet ist.

Bauteile unterschiedlicher Geometrie

Speise - Silicium

SiC-Platten

a) vor dem Aufschmelzen des Siliciums

**FIG.1a**

Graphitplatte

Bauteile unterschiedlicher Geometrie

flüssiges Silicium

SiC-Platten

b) nach dem Aufschmelzen des Siliciums

**FIG.1b**

Graphitplatte

ablaufendes Silicium

Schnitt A – B  FIG. 2a

Draufsicht  FIG. 2b

Schnitt A – B  FIG. 3a

Draufsicht  FIG. 3b

2

4

3

Schnitt A – B

**FIG. 4a**

3

4

2

4

A

B

Draufsicht

**FIG. 4b**

4

2

Seitenansicht

**FIG. 4c**

Schnitt A-B    FIG.5a

Draufsicht    FIG.5b

FIG.6a

8

2

6

10

5

Schnitt A−B

7

7

A ◄ 6 ► B

FIG.6b

Draufsicht